# EUROPEAN PATENT APPLICATION

(11) **EP 2 688 322 A1**
(43) Date of publication of application: **22.01.2014**
(21) Application number: 12305875.2
(22) Date of filing: 19.07.2012
(51) Int. Cl.: H04W 4/22

(54) **Protected broadcast in a warning message delivery chain**

(71) Applicant: Alcatel Lucent, 75007 Paris (FR)
(72) Inventor: Godin, Philippe, 91620 Nozay (FR); Sapiano, Philip, Swindon, WI SN5 7DJ (GB)
(74) Representative: Hervouet, Sylvie

(57) **Abstract**

A node suitable for use in a warning message delivery chain (1) in a telecommunication cellular network, comprising: a receiver for receiving a warning message (2), a state determiner for determining the state of a downstream node (3, 5, 5', 7, 7', 9, 9') among "ON" or "OFF", a sender for sending said warning message (2) at least to any downstream node (3, 5, 5', 7, 7', 9, 9') whose state is "ON", a store for storing said warning message (2), a repeater for sending said stored warning message (12) to any downstream node (3, 5, 5', 7, 7', 9, 9') whose state is "OFF" during the sending of said warning message (2) by said sender, after the state of said downstream node (3, 5, 5', 7, 7', 9, 9') returns back to "ON".

## Description

### TECHNICAL FIELD

The technical field is the one of telecommunication cellular network and is more particularly in relation with warning message delivery.

### BACKGROUND

The present disclosure is related to warning services and to the broadcast of warning messages.

A warning service, such as Earthquake and Tsunami Warning Service, ETWS, in Japan, (CMAS in US, KPAS in Korea, EU-Alert in EU, etc.) is intended, in case of a detection, e.g. by a meteorological agency, of a natural disaster, such as an earthquake or a tsunami or equivalent, to broadcast at least one warning message, to any person located in a validity area comprising at least the area probably impacted by said natural disaster, through the use of communication networks, such as telecommunication cellular networks and mobile terminals.

Such a warning message typically comprises emergency information about a detected natural disaster and/or guidelines to preserve/escape from said natural disaster. Said warning message must be broadcast as quickly as possible and to as many persons as possible in said validity area.

Telecommunication cellular networks are most often hierarchically arranged according to a tree or line structure and a warning message can be broadcast from a central server at the root, through at least one downstream intermediary node of said telecommunication cellular network, towards the downstream mobile terminals at the leaves.

A problem may occur when any one of said nodes or any one of the links in between, is out of service when such a warning message is broadcast. This results in any node or mobile terminal downstream of said failing node, and consequently any mobile terminal served by any one of said downstream nodes, not receiving the warning message.

Since such warning message can be lifesaving, a solution must be found in order to avoid or mitigate the consequences of such node or link failure/outage.

### SUMMARY

An example of the present disclosure is a node suitable for use in a warning message delivery chain in a telecommunication cellular network, comprising: a receiver for receiving a warning message, a state determiner for determining the state of a downstream node among "ON" or "OFF", a sender for sending said warning message at least to any downstream node whose state is "ON", a store for storing a warning message, a repeater for sending said stored warning message to any downstream node whose state is "OFF" during the sending of said warning message by said sender, after the state of said downstream node returns back to "ON".

According to a preferred feature, said store is designed to store a received warning message only if at least one downstream node's state is "OFF" during the sending of said warning message.

According to a preferred feature, said repeater is designed to send said stored warning message only until an end of validity time of said warning message.

According to a preferred feature, said repeater is designed to send only a reduced number of occurrences of a multiple occurrences warning message.

According to a preferred feature, said repeater is designed to send a stored warning message whose validity time is updated so as to take into account the elapsed time between the time of the sending of the warning message and the time when the state of the downstream node returns back to "ON".

According to a preferred feature, said repeater is designed to send said stored warning message only to a downstream node serving mobile terminals in a validity area of said warning message.

According to a preferred feature, a downstream node is an immediately downstream node.

According to a preferred feature, the node is a concentrator and a downstream node is a base station.

According to a preferred feature, the telecommunication cellular network is LTE, the node is a mobility management entity, MME, and a downstream node is a home base station, HeNodeB.

According to a preferred feature, the telecommunication cellular network is LTE, the node is a gateway, HeNodeB-GW, and a downstream node is a home base station, HeNodeB.

Another example of the present disclosure is a method for delivering a warning message, suitable for use in a warning message delivery chain in a telecommunication cellular network, said method comprising the steps of: receiving a warning message, determining the state of a downstream node among "ON" or "OFF", sending said warning message at least to any downstream node whose state is "ON", storing said warning message, sending said stored warning message to any downstream node whose state is "OFF" during the sending of said warning message, after the state of said downstream node returns back to "ON".

According to a preferred feature, said storing a warning message step is applied only if at least one downstream node's state is "OFF" during the sending of said warning message.

According to a preferred feature, said sending a stored warning message step is applied only until an end of validity time of said warning message.

According to a preferred feature, said sending a stored warning message step is applied only a reduced number of occurrence of a multiple occurences warning message.

According to a preferred feature, said sending a stored warning message step is applied only to a downstream node serving mobile terminals in a validity area of said warning message.

### BRIEF DESCRIPTION OF THE DRAWINGS

Others features, details and advantages of the invention will become more apparent from the detailed illustrating description given hereafter with respect to the drawings on which:
- figure 1 shows a typical architecture of a warning message delivery chain in a generic telecommunication cellular network,
- figure 2 illustrates the particular architecture of an LTE telecommunication cellular network,
- figure 3 is a diagram illustrating the process according to a particular embodiment.

### DETAILED DESCRIPTION

The present disclosure deals with the broadcast of a warning message 2. When a natural disaster occurs, a warning service, based on an information coming e.g. from a meteorological agency is informed and builds a warning message 2.

Said warning message 2 typically comprises a content and some contextual parameters. The content is e.g. a text/audio message containing information about the natural disaster. It may comprise a type: earthquake, tsunami, etc., and other valuable information such as the time, the location, the magnitude, etc. It may also comprise various recommendations about the adequate behavior in front of such a natural disaster. Contextual parameters may among others comprise a spatial validity and/or a temporal validity of said warning message 2. The spatial validity defines a validity area in which the warning message is to be broadcast. It may be defined by a geographically defined area, comprising at least the area maybe affected by said natural disaster and its surroundings.

The temporal validity defines a time window, or any equivalent information enabling the determination of such time window, within which the warning message is useful and can be broadcast. Said time window typically starts when the natural disaster is detected and ends when the warning message is no longer useful to be broadcast.

After said warning message has been built by the warning service, it has to be broadcast to a maximum of the persons present in said validity area. This is intended to be done through a warning message delivery chain 1 relying upon an infrastructure of at least one telecommunication cellular network. The aim is to send/broadcast the warning message 2 to all the reachable mobile terminals 9, 9' present in said validity area.

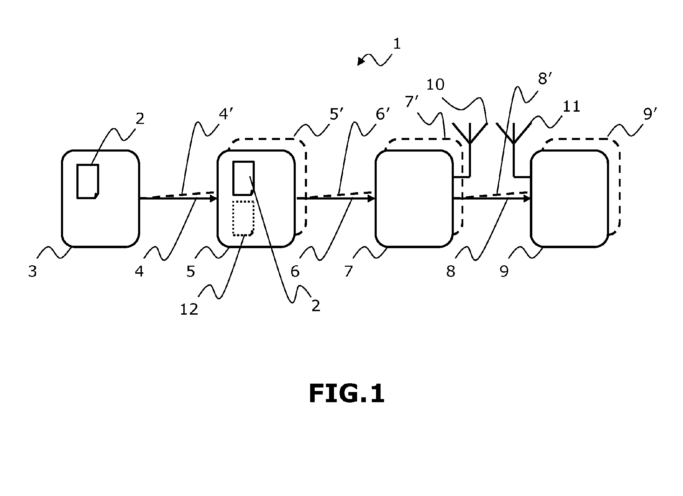

Figure 1 illustrates such a generic warning message delivery chain 1. Such a generic warning message delivery chain 1 typically comprises a first central node 3. Said central node 3 is the first to receive the warning message 2 in that said warning message 2, once built, is transferred by the warning service to said central node 3. The central node 3 then sends said warning message 2, through link 4, to a node 5. It may also send it to at least one other node, as figured by node 5', through link 4'. Said node 5, in turn sends said warning message 2, through link 6, to a node 7. It may also send it to at least one other node, as figured by node 7', through link 6'. Said node 7, in turn sends said warning message 2, through link 8, to a mobile terminal 9. It may also send it to at least one other mobile terminal, as figured by mobile terminal 9', through link 8'.

Said warning message delivery chain 1 may thus comprise any number of intermediary nodes in between said central node 3 and the final mobile terminals 9, 9'. Said warning message delivery chain 1 has thus the form of a line or a tree going down from said central node 3 to the ending nodes consisting in mobile terminals 9, 9'.

Since the direction of transmission of the warning message 2 is unique and known, from left to right in the plan of figure 1, it is possible to define, a streaming direction, and for any given node, some downstream node(s) and/or some upstream node(s). E.g. node 5 is a downstream node of central node 3 and an upstream node of node 7 or of node 9. Similarly node 7 is a downstream node of both central node 3 and node 5. Node 5 is the immediate upstream node of node 7.

Despites said warning message delivery chain 1 may comprise any number of nodes in between a single central node 3 and the final mobile terminals 9, 9', said nodes may be differentiated according to their positions in the delivery chain 1. Last/ultimate nodes of the delivery chain 1 are mobile terminals 9, 9'. In a typical telecommunication cellular network, penultimate nodes 7, 7' can be generically called base stations. The communication link 8, 8' between such a base station node 7, 7' and a mobile terminal 9, 9' is typical a radio link, as figured by antennas 10, 11. Other nodes 3, 5, 5' upstream of such a base station 7, 7', can be generically called concentrators. There can be any number of such concentrators 3, 5, 5' nodes in the delivery chain 1. Most often said concentrators are arranged in a tree structure. The communication links 4, 4' between them and the communication links 6, 6' with base stations 7, 7' are generally wired ones.

Any node 3, 5, 5', 7, 7', 9, 9' in a warning message delivery chain 1 can be out of service, for any reason, during the broadcast of a warning message 2. This is as much as prejudicial as said out of service node is upstream in the delivery chain 1, since all of its downstream nodes and more particularly all of its downstream mobile terminals 9, 9' are thus more numerous that would miss the warning message 2.

According to an embodiment, any node 3, 5, 5', 7, 7' in a warning delivery chain 1, that is potentially any node but a mobile terminal 9, 9', because a mobile terminal 9, 9' is the most downstream node, may overcome such a problem for at least one of its downstream nodes in said delivery chain 1, provided it comprises: a receiver for receiving a warning message 2, a state determiner for determining the state of said downstream node among "ON" or "OFF", a sender for sending said warning message 2 to at least any downstream node whose state is "ON", a store for storing said warning message 2, a repeater for sending said stored warning message 12 to any downstream node whose state is "OFF" during the sending of said warning message by said sender, after the state of said downstream node returns back to "ON".

Such a node can then be called a monitoring or protecting node, since it is able to monitor or protect at least one of its downstream nodes. Said downstream node can thus be called monitored or protected node.

Such a node thus uses said state determiner to monitor the state of at least one of its downstream nodes. Said state distinguishes between an "ON" state where said downstream monitored node is active and functional, at least enough to receive a warning message 2 from its upstream node and transmit it to its downstream node(s), and an "OFF" state when said downstream monitored node is not fully functional. A node is in an "OFF" state, when it is either powered off, disconnected, or partially or fully failing. A node is in an "OFF" state, when, for any reason, it is not capable to receive a warning message 2 sent from its upstream node or to transmit it to its downstream node(s).

A link between two nodes may also fails. Since a node generally does not have any computing capacity for itself, its state is here not distinguished from the state of its immediate downstream node, as it can be determined by a monitoring upstream node. So, if a link is for any reason "cut", its state is "OFF". This results in the state of its immediate downstream node being "OFF" as observed by any monitoring upstream node. When said link is "repaired" and is no longer "cut", its state returns back to an "ON" state. This may be observed by the state of its immediate downstream node returning back to an "ON" state.

Such a node uses said sender to send, as in prior art, a received warning message 2 to the downstream nodes of said node. Here two embodiments are possible. According to a first embodiment said sender works as in prior art and sends any received warning message 2 systematically to all downstream nodes independently of their state. According to a second embodiment, since a state determiner is available and able to determine the state of any downstream node, the sender may test the state of a downstream node and not send said received warning message 2 to any downstream node whose state appears to be "OFF".

Such a protecting node uses said store to store any incoming warning message 2 into a stored warning message 12, which is a copy of said warning message 2.

Such a node uses said repeater to send said stored warning message 12 stored in said storage means to any downstream node whose state is "OFF" during the sending of said warning message 2 by said sender. In order said sending to be useful, it is advantageously applied after said receiving downstream node returns back to an "ON" state.

By doing so, when a node would have otherwise missed a warning message 2 because of being in an "OFF" state when said warning message 2 is broadcast, one of its upstream nodes protects said node by temporarily storing the missed warning message 2 into a stored warning message 12. Thus, when said protected node that was previously in "OFF" state, returns back to "ON" state, its upstream protecting node can send said stored warning message 12 to said downstream protected node.

Here at least two embodiments are possible. According to a first embodiment, the monitoring node systematically stores a warning message 2, in case of necessity. According to a second preferred embodiment, the monitoring node stores said incoming warning message 2 only if at least one of its downstream monitored nodes is in an "OFF" state during the reception of said warning message 2.

The sending of a stored warning message 12 to a downstream node, is preferably applied as soon as possible after said downstream node's state is "ON" again. The aim of the repeater is to correct or mitigate the consequences of a node being in an "OFF" state during a broadcast of a warning message 2. Consequently, since the broadcast is timely critical, the remedy, that is, the sending of a stored warning message 12 is also timely critical.

A repeater is designed to send said stored warning message 12 when the monitored downstream node revert back to an "ON" state. According to a preferred embodiment, said sending may be conditioned to said warning message 2 still being valid. Said validity may be checked by the end of the validity time of said warning message 2 not already reached. To do so, the protecting node when receiving a warning message 2 extracts from it or derives from information in it the validity time associated and compares said end of the validity time to a current time.

Depending on the type of warning message it may be repeated a given number of times. This is not to be confused with a following different message. In a typical warning procedure, a first message is generally sent as quickly as possible with minimum information. Then, in a second time, a following message may be sent comprising more detail information.

Any one of these (first or following) messages may be repeated. When a warning message is thus so identically repeated, the repeater may choose to store all said repeated messages and to send them all to protected downstream node(s).

Alternately, in order not to overload the protected node(s), when several identical warning messages 2 are so received, the repeater may choose to send only a reduced number of occurrences of said multiple occurrences warning messages, e.g. only one occurrence, e.g. the last one.

The repeater may also send to the downstream node the stored warning message 12 with an updated validity time taking into account the time elapsed between the time of sending of the initial warning message 2 and the time when the state of the downstream node returns back to "ON".

In a normal warning procedure, a given node in a warning message delivery chain 1 is designed to send a warning message 2 only to nodes serving mobile terminals in a validity area of said warning message 2. Said validity area is defined in information associated to said warning message 2. It can be used, along with telecommunication cellular network topology to determine concerned mobile terminals 9, 9' and thus their upstream serving nodes.

Accordingly, said repeater, when acting in replacement of the normal warning procedure, acts the same way. Said repeater is designed to send said stored warning message 12 only to a downstream node serving mobile terminals 9, 9' in a validity area of said warning message 2. By doing so, the protecting warning procedure acts the same as the normal warning procedure.

A monitoring or protecting node may monitor or protect any of its downstream nodes. However according to a preferred embodiment, it is advantageous to implement the protection of a node by its immediate upstream node. In others words, it is advantageous that a protected downstream node is an immediate downstream node of the protecting node. This is advantageous when it comes to the state determining means, because a node is generally more easily aware of the state of its immediately downstream nodes.

Any node in a telecommunication cellular network can be protected this way. However, the reliability of a node in a telecommunication cellular network is generally high enough for such a protection to be useless. This is especially true when the node is at a high upstream level in said delivery chain 1. However there are some particular cases where such a protection becomes useful.

Since the failure probability of a node slightly increases as it is located downstream in a delivery chain 1, the interest of the disclosure also increases for a node located downstream, not far from the mobile terminals 9, 9'.

In any kind of telecommunication cellular network it is advantageous to protect a base station 7, 7', that is, the last node before a mobile terminal 9, 9', and the node 7, 7' connecting mobile terminals 9, 9' through a radio link 8, 8'. A node upstream of a base station is called a concentrator 5, 5'. Thus the disclosure is well suited to be implemented in a (last) concentrator 5, 5' in order to protect its downstream base stations 7, 7'.

The high reliability of a node pertaining to a telecommunication cellular network made the probability of said node being in an "OFF" state during the broadcast of a warning message 2 very small. Said high reliability is guaranteed by the network operator which is in control of said node. There is at least one particular configuration where this is not the case, because a user can turn "OFF" a node said user controls.

It is the case where the node 7, 7' is a home base station, mastered by a user. The user may turn such a node in "OFF" state, e.g. by powering it down.

Since, due to the user's will, the probability of a node to be in an "OFF" state during a warning message broadcast seriously increases in this case, the disclosure becomes of great interest.

Such a home base station, mastered by a user (non operator), appears in LTE networks where exist some home HeNodeB or HeNB in short.

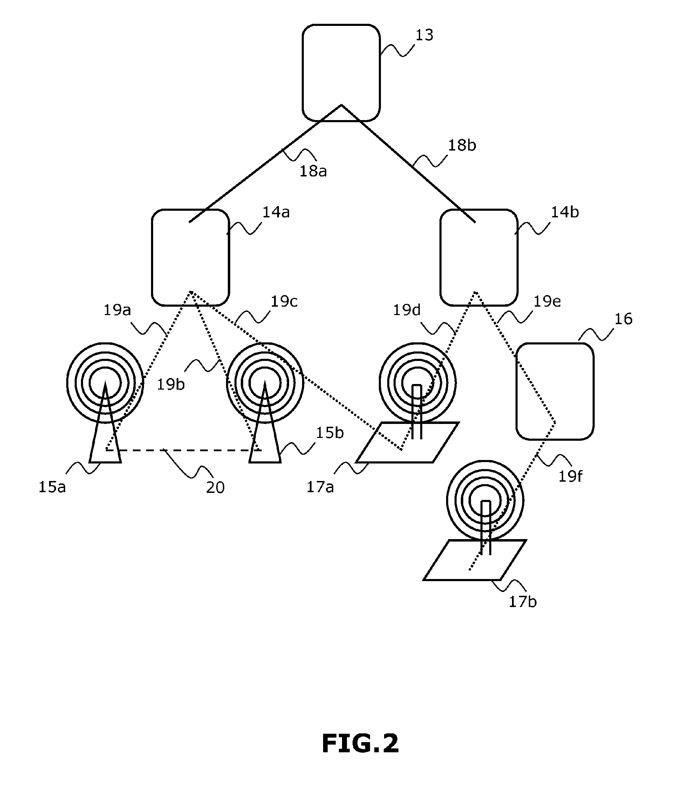

Figure 2 illustrates a typical topology of an LTE telecommunication cellular network. Such a network typically comprises a central node 13 also called CBC in LTE terminology. Downstream of said node 13, linked through links 18a, 18b, one can find at least one level of concentrator nodes 14a, 14b, called mobility management or MME in LTE terminology. At the last level, linked through links 19a, 19b, one can find base stations 15a, 15b. These base stations are called eNodeB, or eNB in short, in LTE terminology. They are linked between them through links 20.

Another kind of base station that can be found in an LTE network, is home base station, also called HeNodeB, or HeNB in short, 17a, 17b. Such a HeNodeB, 17a, 17b may be linked to the network in two different ways. According to a first way, a HeNodeB 17a may be linked to an LTE network through a link 19c, respectively a link 19d, to a MME 14a, respectively a MME 14b. According to a second way, a HeNodeB 17b may be linked to an LTE network through a link 19f, to a gateway 16, called HeNodeB-GW, or HeNB-GW in short, in LTE terminology. Said gateway 16 is in turn linked through a link 19e, to a MME 14b.

Accordingly, since the immediate upstream node of a home base station HeNodeB 17a, 17b, may be either an MME node 14a, 14b or a dedicated gateway HeNodeB-GW 16, said immediate upstream node can advantageously implement the protecting means and process.

A particular protecting configuration is thus implemented, in an LTE network, in a mobility management entity, MME, 14a, 14b, to protect a downstream node being a home base station, HeNodeB, 17a.

Another particular protecting configuration is thus implemented, in an LTE network, in a gateway, HeNodeB-GW, 16, to protect a downstream node being a home base station, HeNodeB, 17b.

Similarly, another particular protecting configuration can be implemented in a 3G/UMTS telecommunication cellular network, in a gateway, called HNodeB-GW in 3G/UMTS terminology, to protect a downstream node being a home base station, called HNodeB in 3G/UMTS terminology. Said configuration is particularly advantageous, because such a HOME base station is mastered by a user and can thus be powered off.

Despites being less interesting, because a base station eNodeB is mastered by an operator, and thus exhibits a better reliability, it is possible to implement a protecting configuration, in an LTE network, in a mobility management entity, MME, 14a, 14b, to protect a downstream node being a (normal) base station, eNodeB, 15a, 15b.

Similarly, another particular protecting configuration can be implemented in an 3G/UMTS telecommunication cellular network, in a radio network controller, called RNC in 3G/UMTS terminology, to protect a downstream node being a base station, called NodeB in 3G/UMTS terminology.

Similarly, another particular protecting configuration can be implemented in a GSM telecommunication cellular network, in a base station controller, called BSC in GSM terminology, to protect a downstream node being a base station, called BS in GSM terminology.

Similarly, another particular protecting configuration can be implemented in any kind of telecommunication cellular network, in a base station, e.g. called BS in GSM terminology, NodeB in 3G/UMTS terminology, or eNodeB in LTE terminology, to protect a downstream node being here one of the cells of said base station. This particular configuration may be interesting in that a base station has a very low probability of being "OFF", but one of its cells may be temporarily "OFF".

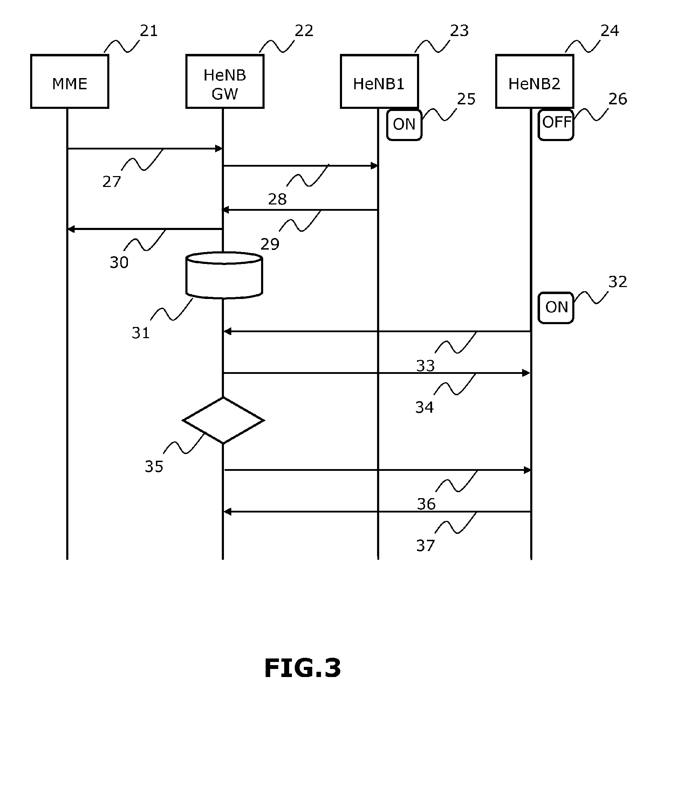

With respect to figure 3 is particularly described an embodiment of a process of a warning message delivery in the case of an LTE network comprising an MME 21, a gateway HeNodeB-GW 22, and two home base stations HeNodeB1 23 et HeNodeB2 24 connected to the network through said gateway 22.

The monitoring/protecting node is here the gateway HeNodeB-GW 22. It monitors/protects the two home base stations HeNodeB1 23 and HeNodeB2 24.

The MME 21 has received a warning message 2. In a first step 27, it sends it downstream to said gateway HeNodeB-GW 22, e.g. using a "Write Warning Request" message. It is supposed that the first home base station HeNodeB1 23 is in "ON" state while the second home base stations HeNodeB2 24 is in "OFF state. This is figured by indicators 25, 26. Accordingly, since the gateway HeNodeB-GW 22 is aware of these respective states, in a step 28, gateway HeNodeB-GW 22 only sends the warning message 2 downstream to the first home base station HeNodeB1, 23, e.g. using a "Write Warning Request" message.

In a step 29, the first home base station HeNodeB1 acknowledges response by sending back e.g. a "Write Warning Response" message to the gateway HeNodeB-GW 22.

In turn, in a step 30, the gateway HeNodeB-GW 22 acknowledges response by sending back e.g. a "Write Warning Response" message to the MME 21.

Since at least one downstream node, here the second home base station HeNodeB2, 24, was in "OFF" state during the broadcast of said warning message 2, the gateway HeNodeB-GW 22 stores a copy 12 of said warning message 2 in a store 31.

Let us consider that the second home base station HeNodeB2, 24, changes its state into an "ON" state, as figured by indicator 32. In step 33, said second home base station HeNodeB2, 24, initiates a connection with its upstream node, here gateway HeNodeB-GW 22, e.g. through a "S1 Setup Request" message.

In step 34, gateway HeNodeB-GW 22 responds, e.g. through a "S1 Setup Response" message.

Now gateway HeNodeB-GW 22 is aware of the "ON" state of second home base station HeNodeB2, 24 and is able to send to it the stored warning message 12.

Before applying said sending step, the gateway HeNodeB-GW 22 may proceed to some validity checks 35. Said validity checks may include validity area and validity time.

If said checks are ok, the gateway HeNodeB-GW 22, in step 36 sends the previously stored warning message 12 to second home base station HeNodeB2, 24, e.g. using a "Write Warning Request" message.

In a step 37, the second home base station HeNodeB2 acknowledges response by sending back e.g. a "Write Warning Response" message to the gateway HeNodeB-GW 22.

## Claims

1. A node suitable for use in a warning message delivery chain (1) in a telecommunication cellular network, ***characterized in that*** said node comprises:
- a receiver for receiving a warning message (2),
- a state determiner for determining the state of a downstream node (3, 5, 5', 7, 7', 9, 9') among "ON" or "off"
- a sender for sending said warning message (2) at least to any downstream node (3, 5, 5', 7, 7', 9, 9') whose state is "ON",
- a store for storing said warning message (2),
- a repeater for sending said stored warning message (12) to any downstream node (3, 5, 5', 7, 7', 9, 9') whose state is "OFF" during the sending of said warning message (2) by said sender, after the state of said downstream node (3, 5, 5', 7, 7', 9, 9') returns back to "ON".

2. The node of claim 1, wherein said store is designed to store a received warning message (2) only if at least one downstream node's state is "OFF" during the sending of said warning message (2).

3. The node of any one of claim 1 or 2, wherein said repeater is designed to send said stored warning message (12) only until an end of validity time of said warning message (2).

4. The node of any one of claim 1 to 3, wherein said repeater is designed to send only a reduced number of occurrence of a multiple occurrences warning message (2).

5. The node of any one of claim 1 to 4, wherein said repeater is designed to send a stored warning message (12) whose validity time is updated so as to take into account the elapsed time between the time of the sending of the warning message (2) and the time when the state of the downstream node (3, 5, 5', 7, 7', 9, 9') returns back to "ON".

6. The node of any one of claim 1 to 5, wherein said repeater is designed to send said stored warning message (12) only to a downstream node (3, 5, 5', 7, 7', 9, 9') serving mobile terminals (9, 9') in a validity area of said warning message (2).

7. The node of any one of claim 1 to 6, wherein a downstream node (3, 5, 5', 7, 7', 9, 9') is an immediately downstream node.

8. The node of claim 7, wherein the node is a concentrator (3, 5, 5') and a downstream node is a base station (7, 7').

9. The node of claim 8, wherein the telecommunication cellular network is LTE, wherein the node is a mobility management entity, MME, (14a, 14b) and wherein a downstream node is a home base station, HeNodeB (17a).

10. The node of claim 8, wherein the telecommunication cellular network is LTE, wherein the node is a gateway, HeNodeB-GW, (16), and wherein a downstream node is a home base station, HeNodeB (17b).

11. A method for delivering a warning message (2), suitable for use in a warning message delivery chain (1) in a telecommunication cellular network, ***characterized in that*** said method comprises the steps of:
- receiving a warning message (2),
- determining the state of a downstream node (3, 5, 5', 7, 7', 9, 9') among "ON" or "OFF",
- sending said warning message (2) at least to any downstream node (3, 5, 5', 7, 7', 9, 9') whose state is "ON",
- storing said warning message (2),
- sending said stored warning message (12) to any downstream node (3, 5, 5', 7, 7', 9, 9') whose state is "OFF" during the sending of said warning message (2), after the state of said downstream node (3, 5, 5', 7, 7', 9, 9') returns back to "ON".

12. The method of claim 11, wherein said storing a warning message (2) step is applied only if at least one downstream node's state is "OFF" during the sending of said warning message (2).

13. The method of any one of claims 11 to 12, wherein said sending a stored warning message (12) step is applied only until an end of validity time of said warning message (2).

14. The method of any one of claims 11 to 13, wherein said sending a stored warning message (12) step is applied only a reduced number of occurrence of a multiple occurences warning message (2).

15. The method of any one of claims 11 to 14, wherein said sending a stored warning message (12) step is applied only to a downstream node (3, 5, 5', 7, 7', 9, 9') serving mobile terminals (9, 9') in a validity area of said warning message (2).
